# EUROPEAN PATENT APPLICATION

(11) **EP 2 249 152 A2**
(43) Date of publication of application: **10.11.2010**
(21) Application number: 10161831.2
(22) Date of filing: 04.05.2010
(51) Int. Cl.: G01N 29/07, G01N 29/11, G01N 29/48, G01N 29/44

(54) **A method and system for distance gain sizing using phased array systems**

(30) Priority: 05.05.2009 US 175686 P
(71) Applicant: Olympus NDT, Waltham, MA 02453 (US)
(72) Inventor: Langlois, Pierre, QUEBEC CITY Québec (CA); Zhang, Jinchi, QUEBEC CITY Québec (CA); Kass, Daniel Stephen, ATTLEBORO, MA 02703 (US); Pelletier, Eric, QUEBEC CITY Québec G2L 3J5 (CA)
(74) Representative: Franzolin, Luigi

(57) **Abstract**

Herein disclosed is a distance gain sizing (DGS) method and system using an ultrasonic phased array system (DGS PA) to provide an effective defect size of a detected defect within a test object. The phased array system is used to emulate the conventional DGS operation when three most commonly used single beam probes are used. The conventional reference DGS curves are translated to DGS PA curves for specific phased array system and phased array probe after sensitivity calibration. Echo signal from a defect obtained by a phased array operation is compared to the DGS PA curves for an optimal inspection angle to obtain the effect size of the defect.

## Description

### CROSS REFERENCE TO RELATED APPLICATIONS

The present application claims the benefit of U.S. Provisional Patent Application No. 61/175,686 filed on May 09, 2009, which is incorporated herein by reference in its entirety.

### FIELD OF THE DISCLOSURE

The present disclosure generally relates to a method and system for ultrasonic non-destructive inspection (NDI) of flaws, more-particularly, to a method and system which provides distance gain sizing (DGS) of detected flaws in object materials using a phased array system.

### BACKGROUND OF THE DISCLOSURE

In ultrasonic NDI industry, several methods exist to provide accurate sizing of defects. One such method is DGS (Distance-Gain-Sizing) which utilizes a series of distance-amplitude curves that represent the amplitude of echo signals of an acoustic reflector (defect) as a function of distance (also referred to as sound path) between the reflector and the probe-test piece interface. It is well known in the art that the amplitude of an echo signal reflected from a given reflector or defect is a function of the sound path from the reflector to the probe-test piece interface. Reflecting this function, reference DGS distance-amplitude curves have been established based on theoretical calculations and empirical data collected from testing different types of ultrasonic single beam probes (UT) and reference defects. For each reference DGS curve, the size of a typical reflector is given. The DGS technique uses the distance and echo amplitude data obtained from field testing on an unknown defect to look up a matching reference DGS curve. The size of the typical reflector used in establishing the reference DGS curves is substantially equivalent in size to the unknown defect.

Reference reflectors used in reference DGS diagrams may be of different types. Specifically, the reflector type is either a flat bottom hole (FBH), a side drilled hole (SDH) or a hemispherical bottom holes (HBH) or backwall.

With the DGS method, the echo amplitude from a real ultrasonic test event is compared to the echo height of the reference DGS diagram and the 'effective' size of defect can be evaluated by looking up the effective size of the reflector that provides substantially the same echo amplitude. These reference DGS curves allow direct reading of substantially equivalent reflector size without calculation. The DGS sizing method is described in the European Inspection Standard EN 583-2-2001 entitled: Non-destructive testing Ultrasonic examination Part 2: Sensitivity and range setting. The standard will be referred to as 'Standard' in the present disclosure.

In existing DGS operations, reference DGS curves are often provided by a plastic sheet laid over the instrument screen for analog instruments or more recently have been integrated into the display of digital instruments.

Conventional ultrasonic testing (UT) instruments must be calibrated to provide adequate utilization of the DGS sizing technique. When using the DGS technique for setting the test sensitivity for specific UT instrument and probe, an applicable reference block is typically employed. For a given DGS curve, the test sensitivity is set by maximizing the echo from one of the reference reflectors in the reference block and adjusting the instrument gain to bring the peak of the echo to the DGS curve. Calibration reflectors can be either of a FBH, SDH, radius (for example with an IIW calibration block) or backwall. Calibration of the sensitivity for any sound path can be performed by matching the amplitude of the reference defect (i.e. the reflector) to the appropriate DGS curve, adjusting instrument gain, and providing the respective attenuations of both the calibration block and the test piece.

Integral or single beam angle transducers have been used in conventional DGS technique. Examples of these transducers can be found in the Olympus NDT's AM4R-8x9 series which has three types of probes with refracted angles of 45°, 60° and 70° in carbon steel respectively. These three refracted angles are typical refracted angles used in the defect detection and sizing with the DGS method although other angles may be used. The choice of one angle or another is dictated by various inspection codes, procedures or other requirements governing a given test. The optimal angle will generally be governed by the geometry of the test piece and the orientation of the defects that the test is intended to locate and size. However, the conventional DGS technique has a drawback when using only one single beam angle transducer probe at a time and the optimal angle is not readily known. Specifically, when this occurs the switching of probes and wedges with different refraction angles is often needed to best fit the geometry of the test piece and the orientation of the defects.

Each of the conventional DGS single beam probes needs to be calibrated properly for DGS operation and the on-screen reference DGS curve needs to be set for each probe, one at a time. The process of switching probes and performing calibration results in inefficiencies for the defect inspection process.

In addition, currently DGS probes are typically limited to the types of 45°, 60° and 70°, which is an undesirable limitation because the orientations of the defects could lie in any angle. Providing amplitude-distance data measured at non-optimal angles will compromise the accuracy of the DGS sizing technique.

There is therefore a long felt, but unmet need for a solution to DGS operations that is easier and more efficient to operate, and more cost effective.

It would therefore be beneficial to provide a method and system to allow the use of a phased array probe for the DGS technique so that amplitude-distance measurement data can be available for multiple angles simultaneously, without the need to change probes and wedges.

### SUMMARY OF THE DISCLOSURE

The invention disclosed herein solves the aforementioned problems related to DGS technique associated with using conventional ultrasonic testing (UT) probe.

It should be noted that in this present disclosure, the terms "probe" and "transducer" are herein used interchangeably. The terms "reflector" and "defect" are herein used interchangeably. The terms "sectorial scan", "S-scan" and "sector scan" are herein used interchangeably.

Accordingly it is a general object of the present disclosure to provide a method and system to achieve distance gain sizing using a phased array system (DGS PA) similar to what is provided by the conventional UT DGS technique to estimate the size of a detected defect within a test object.

It is further an object of the present disclosure to use a phased array system (PA) to emulate the conventional DGS operation when three most commonly used single beam probes are used. In this process, the conventional reference DGS curves are translated to DGS PA curves for a specific phased array system and phased array probe after sensitivity calibration. The echo signal from a defect obtained by a phased array operation is compared to the DGS PA curves for an optimal inspection angle to obtain the effective size of the defect.

It is further an object of the present disclosure to eliminate the need required by conventional DGS technique that probes and wedges to be changed in between two UT operations to cover different optimal inspection angles, such as 45°, 60° or 70°.

It is further an object of the present disclosure to provide a DGS PA system that is able to provide sizing capability to any inspection angle allowed by the typical PA operation, not limited to the three traditional angles of 45°, 60° or 70°.

It is further an object of the present disclosure to provide a more perspectively rendered view of the defects by presenting a sectorial scan (also as "S-scan") along with the DGS curves during DGS PA operation, taking advantage of the PA system. This display allows for better visualization of the defects that are being sized and provides more information for interpretation and more accurate and faster determination of the optimal inspection angle. An S-scan (sectorial or sector scan) represents a 2-D view of all A-scans from a range of scan angles. One can refer to Introduction to Phased Array Ultrasonic Technology Applications, published by R/D Tech Corp., version 2004, page 178-179 for details of the S-scan.

The foregoing and other objects, advantages and features of the present invention will become more apparent upon reading of the following non restrictive description of illustrative embodiments, given for the purpose of illustration only with reference to the enclosed drawings.

### BRIEF DESCRIPTION OF THE DRAWINGS

Fig. 1 is a schematic diagram showing the DGS PA system of the present disclosure, with an exemplary DGS PA display showing three A-scans with DGS curves on the left and an S-scan on the right.

Fig. 2 is a diagram showing the calibration procedure for the preferred embodiment of the DGS PA for discreet inspection angles.

Fig. 3 is a diagram showing sizing procedure for the preferred embodiment with sizing angles of 45°, 60° and 70°.

Fig. 4 is a diagram showing an alternative calibration procedure for DGS PA for continuous range of inspection

### DETAILED DESCRIPTION OF PREFERRED EMBODIMENT OF THE PRESENT DISCLOSURE

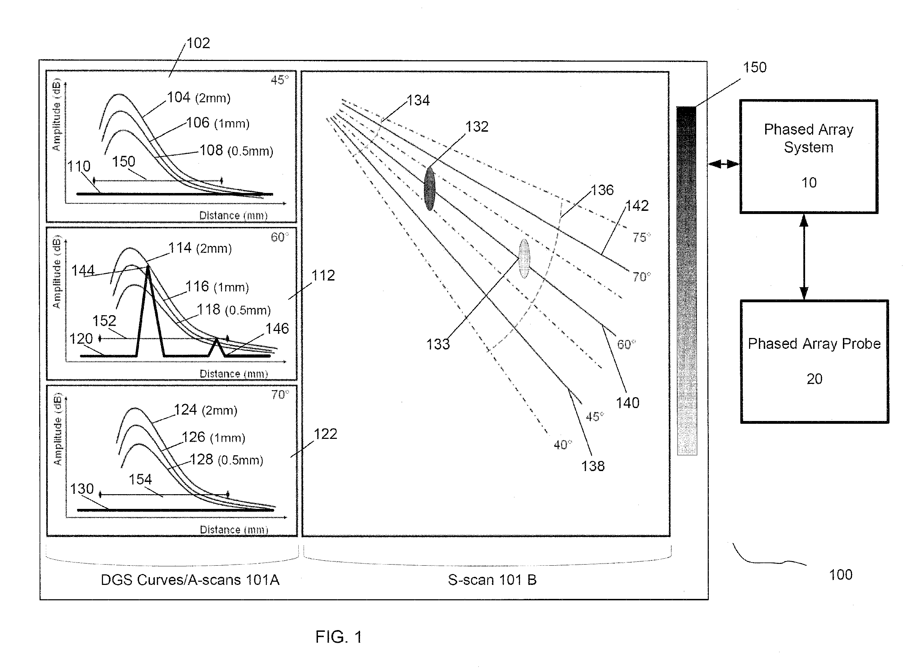

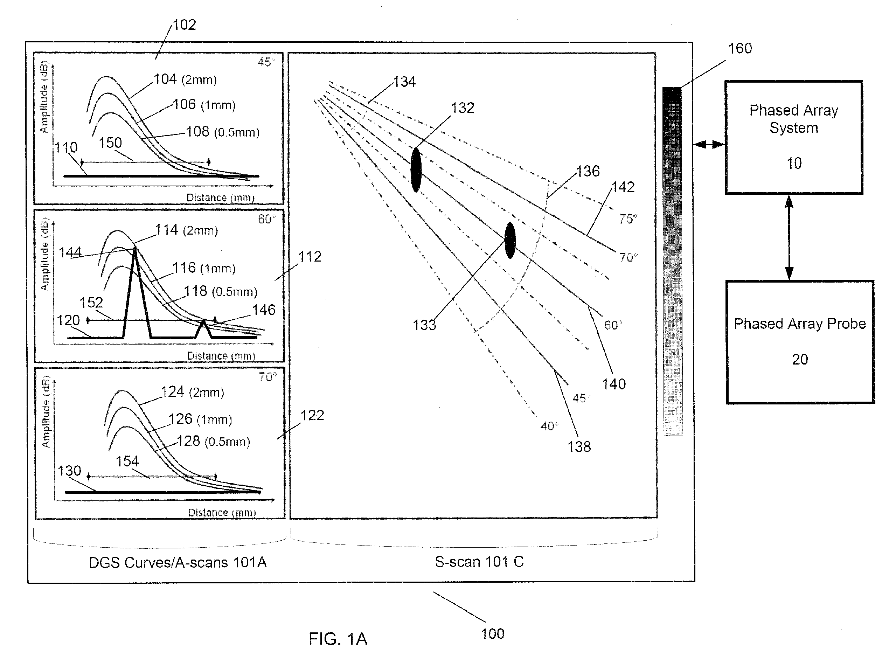

Referring to Fig. 1, the DGS PA operation is carried out by a phased array system **10** with a phased array probe **20.** The PA system **10** includes a display screen **100.** System **10,** probe **20** and display **100** all can be of a conventional phased array system design, and are modified according to the present disclosure for the DGS PA operation.

In the preferred embodiment described herein, the PA system **10** is used to emulate the conventional DGS operation when three conventional single beam probes are used. The way to achieve this is as follows.

As DGS curves are based on the sound field, the focus of the phased array system is set to an infinite distance (no focusing) to simulate the same sound field as the conventional ultrasound probes that these phased array probes are replacing. The three conventional inspection angles that the DGS PA system emulates are the angles 45°, 60° and 70°. For example, a 4MHz, 16 elements phased array probe (2L16-DGS1) and a 2MHz, 8 elements phased-array probe (2L8-DGS2) were used by Olympus NDT to provide refractive angles in carbon steel of 45°, 60° and 70° in DGS operations.

Continuing with Fig. 1, after calibration is performed on the specific phased array system **10** and the specific phased array probe **20,** corresponding reference DGS curves given by the European Inspection Standard EN 583-2-2001 (Standard) for each conventionally used single beam angle" such as 45°, 60° and 70°, are each mapped to corresponding DGS curves for the phased array system **10.** The resulting DGS curves specific to the phased array system **10** and the phased array probe **20** are then stored in the system **10** for each emulated single beam probe of 45°, 60° and 70°. It should be noted that all of the DGS methods described in the present disclosure are not be contained in European Inspection Standard EN 583-2-2001.

Before each DGS PA test, the resulting DGS PA curves are shown in the display 100. In this preferred embodiment, the PA system **10** first displays stored three amplitude-distance diagrams as shown in diagrams **102, 112,** and **122,** associated to inspection angles 45°, 60° and 70° respectively. Each **102, 112**, and **122** display provides at least one of its associated and specific DGS curves related to different defect sizes, typically including a defect size warning curve set by user input. For example, DGS curves **104, 106** and **108** are specific to the inspection angle for 45° and defect size 2 mm, 1 mm and 0.5 mm (defect size warning curve), respectively. DGS curves **114, 116** and **118** in **112** are specific to the inspection angle 60° and defect sizes of 2mm, 1mm and 0.5mm, respectively. DGS curves **124, 126** and **128** in **122** are specific for inspection angle 70° and defect sizes of 2mm, 1mm and 0.5mm, respectively.

During a DGS PA testing, the A-scan signals **110, 120** and **130** are obtained from echo signal for inspection angles 45°, 60° and 70° respectively. They are also displayed within the coordinates showing the corresponding DGS PA curves. Each A-scan has a gate **150, 152** and **154** for calibration and defect characterization for inspection angles 45°, 60° and 70° respectively.

As can be appreciated, the three sets of DGS curves for three given angles are displayed simultaneously in the display screen **100** of the phased array system so that they are available all at the same time to be chosen by the operator for sizing.

One important aspect of the preferred embodiment is to incorporate an S-scan (sectorial scan) display **101B** shown on the display screen **100** besides the DGS curves **101A** shown in **100.** The S-scan provides a means for simultaneously displaying a plurality of A-scan echo signals received from the test object and a more direct and complete view showing the shape, approximate size and location of the defects. As an exemplary view, the S-scan in **Fig. 1** provides the A-scans for all of the inspections angles between 40° and 75°, notably including the inspections angles 45°, 60° and 70° shown as **138, 140** and **142,** respectively.

Continuing further with Fig. 1, the display of the A-scan can be within the coordinates used for corresponding DGS curves in screen area **101A** in Fig. 1. Defect **132** is visible in the S-scan display. In the example provided, the amplitude of the defect echo is at maximum near the inspection angle 60° shown as line **140.** Consequently, the A-scan echo signal **120** for the 60° inspection angle shows in diagram **112** an increase of amplitude hereafter referred to as a defect echo **144** roughly mid-way along the distance axis. Observation of defect echo amplitude peak 144 with respect to DGS curve **118** at the 60° inspection angle indicates that the equivalent size of the defect under scrutiny is about 2mm.

In the preferred embodiment, the defect echo peak **144** is located in gate **152** and a DGS PA software (hereafter as the Software, described later in this disclosure) calculates a value for the effective reflector size (ERS) that can be readily provided.

The DGS sizing can be done by manually looking up the DGS PA curves or preferably by the Software that can determine the Effective Reflector Size (ERS) if the maximum amplitude **144** falls on one of the DGS curves. If the maximum amplitude **144** falls between any two available DGS curves, interpolation is used by the Software to determine the ERS. Many conventional interpolation methods can be used for this purpose, including but not limited to linear interpolation. It should be noted that DGS sizing is performed based on the DGS curves in a given A-scan display. The S-scan is not used for sizing but provides an improved visual interpretation of the test piece being inspected and the determination of the DGS curve set related to which inspection angle should be chosen. Again referring to the Standard, as mentioned above, in order to generate the DGS curve emulating the reference DGS curves for each of the single beam probes, the PA system **10** must be calibrated for each emulated probe angle prior to use. When using the DGS technique for setting the test sensitivity, an applicable reference block shall be employed. As opposed to other similar sizing techniques, DGS calibration requires only one known appropriate reflector for calibration. Any calibration block with a known reference defect of any type (FBH, SDH, backwall, IIW block radii, etc...) can be used. The test block may possibly be used as the reference block as well. Note also that as opposed to other sizing techniques, the calibration block does not need to be of the exact same material make-up as the parts to inspect since the calibration procedure takes into account the attenuation of the test block and the attenuation of the parts to inspect.

An additional advantage of using a phased array system to provide DGS based effective reflector sizing is that when a defect is located at a greater distance from the probe, the PA system can present an adjusted or compensated S-scan view of the defect adjusted with DGS-corrected gain. It is known that a defect at a greater distance of the same size reflects ultrasonic echo signals at lower amplitude which results in a light color on the S-scan.

Typical for an S-scan of a phased array system, Fig. 1 also features a color scale **160** that is provided as a reference to the amplitude strength of the reflected echo signal. Signals approaching black represents maximum height of the amplitude of the echo signals.

Continuing with Fig. 1, waveform **146** at inspection angle 60° shows a 2mm reflector **133** at greater distance than reflector **132** with the same 2mm size. In the un-compensated sectorial scan **101 B,** the 2mm defect **132** is plotted at the higher end of the color scale, while the 2mm defect **133** at a greater distance is plotted at lower end of the color scale. As can been seen, with an un-compensated S-scan, defect **133** could be of a too light color to be effectively visualized.

To assist the visualization of a defect at a greater distance, one novel aspect of present disclosure is to use the calculated DGS curves, such as **114,** to digitally compensate the amplitude loss due to further distance from probe **20.** A "decay rate" for each specific DGS curve can be calculated to provide information in terms of how fast the amplitude drops versus the distance of the defect from probe **20.** The decay rate is then used to compensate the image **133** while still maintaining the original A-scan view **146.**

Turning now to Fig. 1A, an enhanced or compensated S-scan **101 C** shows defect **133** and **132** at the same color level while the original A-scan presentations in diagram **112** remains unchanged. In this instance, the 2mm DGS curves **104, 114 and 124** are used to process the S-scan enhancement. Continuous compensation according to DGS curves of all angles or interpolation between 45°, 60° and 70° can be used to create a smooth S-scan image. This method allows imaging a selected equivalent reflector size as one color throughout the whole volume of a test object and can be applied simultaneously to all angles in the S-scan. The image enhancement or compensation can be turned on or off as desired during a DGS operation of the phased array system.

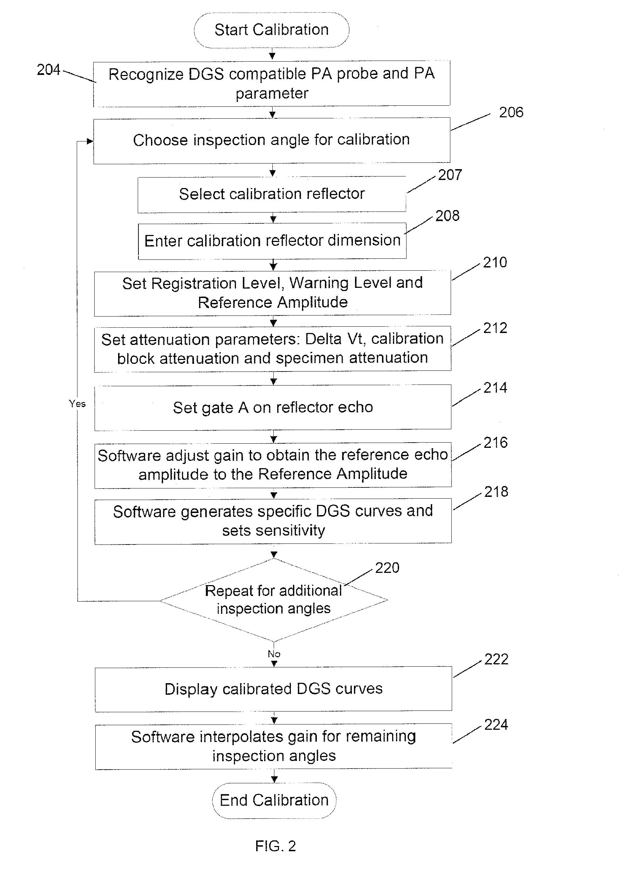

Referring to Fig. 2, the DGS PA software (the Software) is developed, partially under the guideline of the Standard, to perform calibration before a PA distance gain sizing operation can be performed. Fig. 2 is a flowchart describing an exemplary calibration procedure for the preferred embodiment of DGS PA system. As the specific DGS curves are probe dependent, the initial calibration step **204** requires recognition of a DGS adopted phased array probe. As the probe is recognized by the Software, the associated DGS curves calculated from their corresponding reference DGS curves are known and retrieved. Also at step **204,** PA probe parameters are given so that each of the conventionally used single beam probes, such as 45°, 60° or 70°, can be emulated. Recognizing or choosing a probe can be often performed automatically with many PA systems. The probe can also be user selected from a list of DGS approved probes.

Next, the first inspection angle that is to be calibrated is chosen at step **206.** In the preferred embodiment, the exemplary first angle can either be 45°, 60° or 70°. For calibrating each inspection angle, the choice of reference reflector is made at step **207.** DGS specific curves can be calibrated on a variety of reference reflectors such as flat bottomed hole (FBH), side drilled hole (SDH), the backwall or the radii of two standard calibration blocks. Correlation factors shown in the Standard are applied to translate the calibrated DGS curves to the FBH specific DGS curves that are eventually used for sizing. For example, empirically derived correction factor ΔVk is applied for standard calibration block radii Kl-IIW and K2-DSC. This correction factor takes into consideration the concave cylindrical surface of these radii. A correction factor is also required when calibrating on SDH type reference defects. Just as the type of the reference reflector must be known for calibration, the size of the chosen reference reflector, in the case of SDH and FBH type defects only, must also be known in step **208.**

Calibration step **210** requires user input for the registration level, which corresponds to the effective FBH diameter of requested DGS curve to be displayed on the screen, the warning curve offset, defined by the decibel variation of the reference curve to the warning curve and the reference amplitude of the DGS curve. To calculate the specific DGS curves, additional parameters such as ΔVt (shown in the Standard), an empirically derived parameter taking into consideration surfaces differences, coupling differences between the reference block and test piece and transmission loss, the reference block attenuation and the test piece attenuation are provided by the user in calibration step **212.**

During calibration, the signal of a reference reflector is isolated by the gate of sound path in **214** and then the system gain is adjusted so that the maximum amplitude of the reference echo is at 80% of full screen height (FSH) in **216.** At step **218,** the DGS PA software generates the specific DGS curves and warning curve and the sensitivity. At this step, the user has a choice of calibrating an additional inspection angle or exiting the calibration process **220.** Just prior to exiting the calibration process, at step **222,** the calibrated DGS curves are displayed in screen area **101A** and the Software interpolates the gain for the inspection angles other than the calibrated inspection angles for S-scan display purposes only. Note that only the angles for which a calibration has been performed will show the calibrated DGS curves. The gain interpolation step **224** takes into consideration the gain required to adjust the reference echo amplitude for each calibrated inspection angle and interpolates the gain on the discreet angles between the calibrated inspection angles to provide a more readily interpretable S-scan display. For example, the calibration procedure can assign varying levels of gain to the DGS compatible inspection angles 45°, 60° and 70°. In gain interpolation step **224,** the Software adjusts the gain for the additional angles displayed in the S-scan, 46° to 59° for example, to reflect a continuous gain distribution between 45° and 60°. For example, if the calibrated gain at 45° is 10dB and the calibrated gain at 60° is 25dB, the gain of the angles 46° to 59° would start at 11dB and increment up by 1dB for each degree. The gain adjustment of these additional angles is intended for visual purposes of the S-scan only as these angles will not be used for sizing. For angles not confined between two calibrated angles, extrapolation is performed in step **224** to adjust the gain for these inspection angles.

If only one focal law sizing angle is calibrated, the gains of the other focal law angles are set to the same gain. If more than one focal law at the sizing angles is calibrated, the gains of the other focal laws are deduced by interpolation as described above. If the focal law is not within the calibrated angles, the gains of the focal law are deduced by extrapolation method.

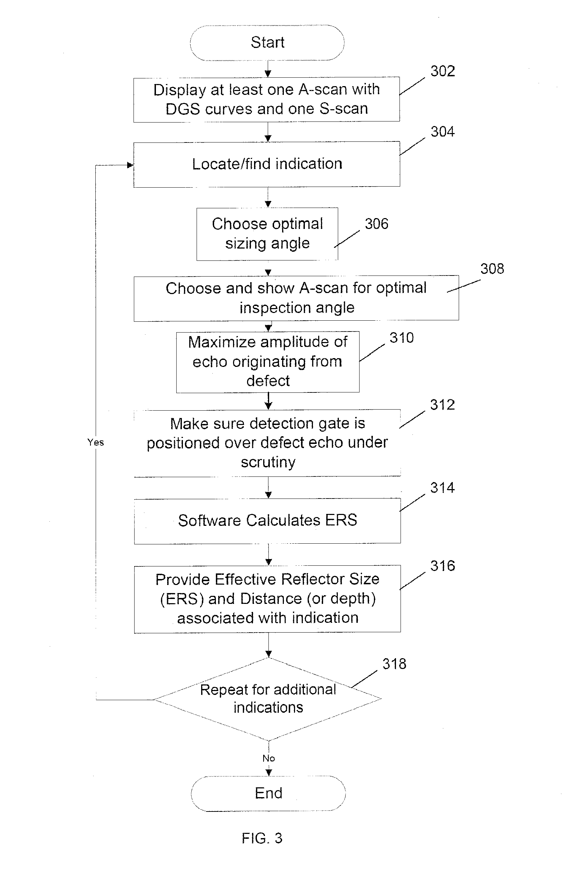

Referring to Fig. 3, which shows a typical procedure for sizing using the DGS PA, a defect is provided demonstrating the procedure and advantage of the DGS PA system. Initially at step **302,** it is recommended that in the screen display **100** as shown in Fig. 1, the S-scan be displayed with at least one A-scan/amplitude-distance diagram. In the preferred embodiment, the display area **100** includes three A-scan/DGS curve composite display **101A** for three inspection angles, such as 45°, 60° and 70°, respectively. The inspection procedure for locating defects that require sizing is well established for conventional ultrasound and phased array operations. The defect is then located at step **304.** With the location of defects known to the phased array system **10,** the optimal angle for sizing is readily obtained from the orientation of the defect in the S-scan display at step **306.** DGS sizing is suitable for defects resembling flat type reflectors. The optimal angle is therefore typically the angle for which the reflection from a given defect is as perpendicular as possible. In the preferred embodiment, any one of the three standard DGS sizing inspection angles can be used for sizing a given defect without changing the probe or inspection set-up. At step **308,** with the optimal sizing inspection angle determined, the A-scan specific for the optimal angle is selected. At step **310,** maximum amplitude of echo signal indicating the defect can be found by using well established PA procedures and display on the selected A-scan. At step **312,** the detection gate, such as **152** in Fig. 1, is checked to make sure that it is positioned over the defect echo under scrutiny. At step **314,** the Software determines the Effective Reflector Size (ERS) if the maximum amplitude falls on one of the DGS curves. If the maximum amplitude falls in between any two available DGS curves, the interpolation method is used by the Software to determine the ERS.

It is worth noting that care must be taken to ensure that the gate (such as shown as **152** in Fig. 1) for the optimal inspection angle is positioned over the defect echo under scrutiny at step **312** and that other defect echoes do not interfere. It is advantageous that, at step **316,** other potentially required parameters defining a given defect, such as defect depth and position, be provided together with the ERS.

At step **318,** the above mentioned procedure can be repeated for all of the defects found for a given inspection. It should be noted that the optimal angle for a given defect can vary from one defect to the next. The advantages of DGS PA are well exploited in such cases and lead to faster and improved inspections. Notably, the S-scan display typically leads to a facilitated interpretation of the inspection and can make it easier to validate whether a given defect resembles a flat type reflector for DGS sizing.

It should be readily understood that the invention described herein is not limited to the three inspection angles of 45°, 60° and 70°. It can be applied to provide DGS for any inspection angle within the range the phased array operation can provide, and any phased array probe configuration that conventional ultrasound DGS is applicable to-- such as, but not limited to, single element, dual element, and like probes. The phased-array system can be programmed to provide inspection angles within various ranges depending on the PA application. It is commonly known that during a phased array operation, individual element pulse delays are modified to provide a plurality of inspection angles (also referred to as focal laws) for a given probe and wedge. However, the DGS curves specific to the PA system **10** and a specific inspection angle as deduced from the reference DGS curves need to be determined and stored in the PA system **10.**

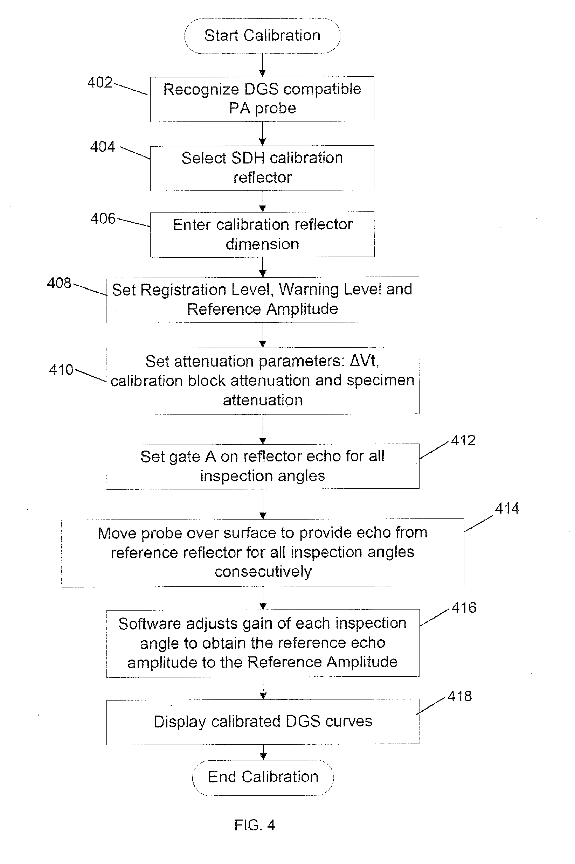

Referring to Fig. 4, although the preferred embodiment describes calibration and sizing with only three angles, such as 45°, 60° and 70°, it can be readily understood that the scope of calibration and sizing can be easily expanded to additional angles of discreet or continuous range. In this case, calibration step **402** for recognizing the PA probe remains the same as for discreet inspection angle calibration in Fig 3. For calibrating a plurality of inspection angles, continuous or discreet, it is convenient to use a side drilled hole (SDH) reference reflector. The choice of this reference reflector can be readily understood by those skilled in the art. At step **406,** the SDH reference reflector diameter is then entered. Given at step **408** are the other required parameters for discreet calibration, notably, the registration level, warning level and reference amplitude. At step **410,** the attenuation parameters are given. At step **412,** the gate is positioned, taking into consideration the varying sound paths that are associated to the same reference reflector for the plurality of inspection angles being calibrated. At step **414,** to calibrate all of the inspection angles, the probe can be moved along the surface of the reference block so as to provide an echo from the reference reflector over each and every inspection angle consecutively. This type of operation is very similar to the phased array sensitivity calibration known to those skilled in the art of phased array NDI. At step **416,** the Software then adjusts the gain for each specific inspection angle so as to provide a plurality of reference reflector amplitudes (one for each inspection angle) equal to the reference amplitude set at step **408.**

Following the DGS calibration for continuous inspection angles, the inspection procedure is the same as it is described in Fig 3 except that the optimal angle chosen for sizing is not limited to the three angles 45°, 60° and 70°. Any angle provided by the S-scan can be used for sizing making it possible to provide more precise sizing measurements. Typically, the instrument display would provide an S-scan and a few A-scan displays in which the user can readily select the most accurate inspection angle for sizing.

Along with this alternative embodiment involving calibration and sizing with a large range of angles, the most relevant A-scans with respect to defects can be tracked so that it is easier for operator to identify the information for sizing. For example, the A-scan with the highest amplitude confined within the measurement gate would be chosen and displayed for sizing purposes and the automated readings of this maximum amplitude in the A-scan would be selected automatically.

In another alternative embodiment, the DGS process using PA in the preferred embodiment as well as in the DGS PA sizing for all the inspection angles other than 45°, 60° or 70° can be fully automated without the need for operator's intervention. For example, once a defect is detected, the optimal sizing angle, the maximum amplitude obtained for the sizing angle and the DGS can be automatically performed. The found defect can be automatically tagged and resulting data can be automatically logged into the PA system **10.** Other data related to the found defect such as the location and the depth can also be logged and stored in the PA system **10.** These data can later be presented and displayed together with associated A-scans.

It should be noted that the issues described in the Standard EN 583-2: 2001 related to DGS level in the near field zone (<0.7N where N is defined as the near field distance of a given probe) is treated in the same way for DGS using PA as stipulated in the Standard. The DGS curves using PA are only valid for range >0.7N as stipulated by the Standard. This is general to all embodiments.

Although the present invention has been described in relation to particular embodiments thereof, many other variations and modifications and other uses will become apparent to those skilled in the art. It is preferred, therefore, that the present invention not be limited by the specific disclosure herein.

## Claims

1. A method of providing distance gain sizing, comprising:
using an ultrasonic phased array system to provide the effective size of a defect detected at an optimum angle within a test object by the phased array system;
providing the phased array system as a phased array probe;
operating the phased array system to excite ultrasonic signals to travel into the test object at a plurality of scan angles and to receive echo signals reflected from said defect; and
obtaining a plurality of echo amplitudes pertaining to the defect.

2. The method of claim 1, further comprising establishing a set of probe-system specific distance gain sizing (DGS) curves for the plurality of scan angles and providing the effective size of said defect using one of said probe-system specific DGS curves pertaining to an optimum angle.

3. The method of claim 2, further comprising the steps of:
a. obtaining a set of universal DGS curves from an established industrial standard procedure for the plurality of scan angles;
b. obtaining parameters of said probe;
c. calculating a set of probe-specific DGS curves according to the universal DGS curves and the parameters of said probe;
d. using the phased array system to obtain measured echo amplitudes from a reference defect with known shape and size according to the standard and adjusting the gain to make the measured echo amplitudes to match the reference echo amplitudes according to the standard; and
e. calculating the probe-system specific sensitivity and generating the probe-system specific DGS curves.

4. The method of claim 2, further comprising the steps of:
a. obtaining an S-scan and an A-scan of said defect using said phased array system and said probe;
b. obtaining the optimum angle position of said defect within the test object and the distance of said defect from said probe;
c. selecting a set of optimum-angle probe-system specific DGS curves for the corresponding optimum angle; and
d. mapping said A-scan onto said optimum-angle probe-system specific DGS curves with corresponding distance of said defect from said probe, selecting the probe-system specific DGS curve on which the peak of said A-scan is located and determining the effective size of said defect to be the corresponding size of the selected DGS curve.

5. The method of claim 2, including scan angles of 45°, 60° or 70°.

6. The method of claim 2, including all discrete scan angles within a predetermined scan range of said phased array system.

7. The method of claim 2, including all continuous scan angles within a predetermined scan range of said phased array system.

8. The method of claim 3, wherein the standard procedure is the procedure published in European Inspection Standard EN 583-2-2001 entitled: Non-destructive testing Ultrasonic examination Part 2: Sensitivity and Range Setting.

9. The method of claim 4, in which the S-scan of said defect is compensated with the loss of amplitude versus said defect's distance from said probe derived from the probe-system specific DGS curve.

10. The method of claim 4, in which said determining the effective size of said defect includes interpolation of the corresponding sizes for two selected adjacent probe-system specific DGS curves.

11. An ultrasonic phased array system, comprising:
a distance gain sizing (DGS) module operable to provide an effective size of a defect detected within a test object at an optimum angle, the phased array system including a display and a phased array probe and being operable to excite ultrasonic signals to travel into the test object at plurality of scan angles and to receive echo signals reflected from said defect, to obtain a plurality of echo amplitudes pertaining to the defect.

12. The phased array system of claim 11, in which the DGS module is operable to establish a set of probe-system specific distance gain sizing (DGS) curves for the plurality of scan angles by performing the following steps:
a. obtaining a set of universal DGS curves obtained from an established industrial standard procedure for the plurality of scan angles;
b. obtaining parameters of said probe;
c. calculating a set of probe-specific DGS curves according to the universal DGS curves and the parameters of said probe;
d. using the phased array system to obtain measured echo amplitudes from a reference defect with known shape and size according to the standard and adjusting the gain to make the measured echo amplitudes to match the reference echo amplitudes according to the standard; and
e. calculating the probe-system specific sensitivity and generating the probe-system specific DGS curves.

13. The phased array system of claim 12, in which the display is configured, in one screen of the display, to display multiple sets of probe-specific DGS curves for each for one of the plurality of scan angles and an S-scan obtained by scanning said defects in said test object.

14. The phased array system of claim 12, in which the DGS module is operable to provide the effective size of said defect using said probe-system specific DGS curves by performing following steps:
a. obtaining an S-scan and an A-scan of said defect using said phased array system and said probe;
b. obtaining the optimum angle position of said defect within the test object and the distance of said defect from said probe;
c. selecting a set of optimum-angle probe-system specific DGS curves for the corresponding optimum angle; and
d. mapping said A-scan onto said optimum-angle probe-system specific DGS curves with corresponding distance of said defect from said probe, selecting the probe-system specific DGS curve on which the peak of said A-scan is located and determining the effective size of said defect to be the corresponding size of the selected DGS curve.

15. The phased array system of claim 12, including scan angles of 45°, 60° or 70°.

16. The phased array system of claim 12, including all discrete scan angles within a predetermined scan range of said phased array system.

17. The phased array system of claim 12 including all continuous scan angles within a predetermined scan range of said phased array system.

18. The phased array system of claim 12, wherein the standard procedure is a procedure published in European Inspection Standard EN 583-2-2001 entitled: Non-destructive testing Ultrasonic examination Part 2: Sensitivity and Range Setting.

19. The phased array system of claim 14, in which the S-scan of said defect is compensated with the loss of amplitude versus said defect's distance from said probe derived from the probe-system specific DGS curve.

20. The phased array system of claim 14, in which said determining the effective size of said defect includes seeking interpolation of the corresponding sizes for two selected adjacent probe-system specific DGS curves.
